# EUROPÄISCHE PATENTANMELDUNG

(11) **EP 0 917 282 A1**
(43) Veröffentlichungstag der Anmeldung: **19.05.1999**
(21) Anmeldenummer: 98110791.5
(22) Anmeldetag: 12.06.1998
(51) Int. Cl.: H02P 9/10, F02G 5/04, H02P 9/04

(54) **Stromerzeugungsanlage und Verfahren zu deren Regelung**

(30) Priorität: 14.11.1997 DE 29720198 U
(71) Anmelder: JENBACHER ENERGIESYSTEME AKTIENGESELLSCHAFT, A-6200 Jenbach (AT)
(72) Erfinder: Plohberger,Diethard,Dipl.-Ing., 6200 Jenbach (AT)
(74) Vertreter: Patentanwälte Dr. Solf & Zapf

(57) **Zusammenfassung**

Die Erfindung betrifft eine Stromerzeugungsanlage und ein Verfahren zur Regelung dieser Anlage, insbesondere eines Blockheizkraftwerkes, bestehend aus einem Verbrennungsmotor (1), insbesondere einem Gas-Verbrennungsmotor, und einem elektrischen Generator (4), wobei eine mit einer ersten Drehzahl (n₁) laufende Kurbelwelle (2) des Verbrennungsmotors (1) mit einer mit einer zweiten Drehzahl (n₂) laufenden Welle (3) des Generators (4) verbunden ist. Bei einem infolge von Laständerungen auftretenden raschen Anstieg der Wellendrehzahl (n₁, n₂) wird die Wellendrehzahl (n₁, n₂) mit Hilfe mindestens einer direkt auf mindestens eine der Wellen (2, 3) wirkenden Bremseinrichtung (8) abgebremst.

## Beschreibung

Die vorliegende Erfindung betrifft ein Verfahren zur Regelung einer Stromerzeugungsanlage und eine Stromerzeugungsanlage, insbesondere eines Blockheizkraftwerkes, bestehend aus einem Verbrennungsmotor, insbesondere einem Gas-Verbrennungsmotor, und einem elektrischen Generator, wobei eine mit einer ersten Drehzahl laufende Kurbelwelle des Verbrennungsmotors mit einer mit einer zweiten Drehzahl laufenden Welle des Generators verbunden ist.

Üblicherweise sind in Blockheizkraftwerken eingesetzte Verbrennungsmotoren zur Regelung der Wellendrehzahl standardmäßig mit einer elektronischen Regelung ausgerüstet, da durch die Wellendrehzahl die - möglichst konstant zu haltende - Frequenz einer vom Generator erzeugten elektrischen Wechselspannung bestimmt wird. Die Regelung der Wellendrehzahl erfolgt dabei bekanntermaßen über die Menge des zur Verbrennung zugeführten Gasgemisches. Die zugeführte Menge des Gasgemisches kann durch Betätigung einer zentralen Drosselklappe eingestellt werden.

Ein Problem, das dabei in der Stromerzeugungsanlage auftritt, besteht darin, daß es bei plötzlichen Laständerungen, wie Lastabwurf im Netzparallelbetrieb oder kurzfristigen Laständerungen im Inselbetrieb, trotz der vorgesehenen Drehzahlregelung aufgrund des Restes an unverbranntem, im Ansaugtrakt zwischen der zentralen Drosselklappe und den Einlaßventilen des Verbrennungsmotors befindlichem Gasgemisch zu einem raschen Drehzahlanstieg des Motors kommen kann. Dies hat einerseits negativen Einfluß auf die Frequenz der vom Generator im Inselbetrieb gelieferten Spannung, andererseits kommt es durch eine überhöhte Wellendrehzahl vor allem bei vollständigem Lastabwurf zu einer Gefährdung des Ventiltriebes. Die bekannte Drehzahlregelung versagt also bei einem lastbedingt sprunghaften Anstieg der Wellendrehzahl.

Dieses Problem soll durch die vorliegende Erfindung beseitigt werden, wobei ein Abstellen der Zündung des Verbrennungsmotors aus sicherheitstechnischen Gründen vermieden werden muß, da durch aus dem Verbrennungsmotor ausgeschobenes, unverbranntes Gasgemisch die Gefahr einer Explosion entstünde.

Erfindungsgemäß wird die Lösung des beschriebenen Problems durch ein Verfahren der eingangs beschriebenen Art erreicht, bei dem bei einem infolge von Laständerungen auftretenden raschen Anstieg der Wellendrehzahl die Wellendrehzahl mit Hilfe mindestens einer direkt auf mindestens eine der Wellen wirkenden Bremseinrichtung abgebremst wird.

Zu diesem Zweck kann erfindungsgemäß eine Stromerzeugungsanlage der eingangs beschriebenen Art zum Einsatz gelangen, bei der zur Regelung der Wellendrehzahl mindestens eine direkt auf mindestens eine der Wellen wirkende Bremseinrichtung vorgesehen ist.

Die Bremseinrichtung ist somit das Stellglied eines Regelkreises zur Regelung der Wellendrehzahl und kann vorteilhafterweise im Falle plötzlich auftretender Drehzahlsteigerungen zum Beispiel so lange eingreifen, bis der Gradient der Wellendrehzahl den Wert Null oder einen festgelegten negativen Wert annimmt und eine standardmäßige elektronische Drehzahlregelung wieder ihre Funktion erfüllen kann.

Bei der Bremseinrichtung kann es sich vorzugsweise um eine Scheibenbremse handeln, die im Bereich einer Kupplung zwischen Motor und Generator, am freien Ende der Kurbelwelle im Bereich des Schwingungsdämpfers oder am freien Ende der Generatorwelle angeordnet sein kann.

Zweckmäßige Ausführungen der Erfindung sind in den Unteransprüchen enthalten. Anhand der in den Zeichnungen dargestellten Ausführungsbeispiele wird die Erfindung näher erläutert. Es zeigen:
- Fig. 1: eine Darstellung einer ersten Ausführung einer erfindungsgemäßen Stromerzeugungsanlage eines Blockheizkraftwerkes,
- Fig. 2: ein regelungstechnisches Schema einer erfindungsgemäßen Stromerzeugungsanlage,
- Fig. 3: eine Darstellung einer zweiten Ausführung einer erfindungsgemäßen Stromerzeugungsanlage,
- Fig. 4: eine Darstellung einer dritten Ausführung einer erfindungsgemäßen Stromerzeugungsanlage.

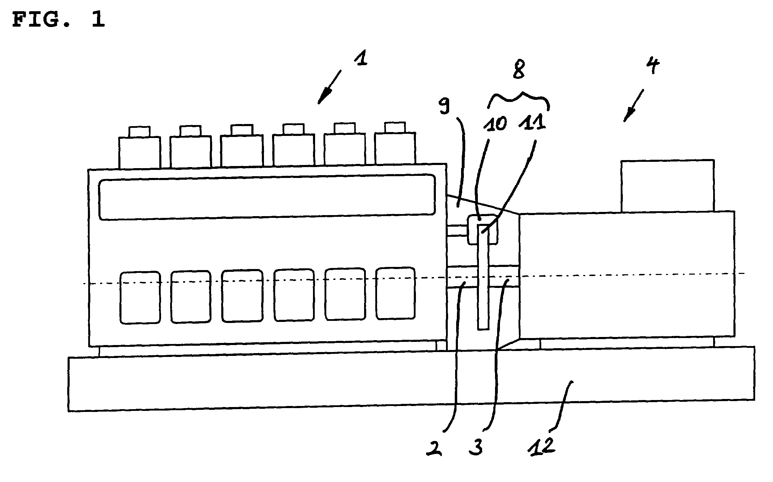

Wie in Fig. 1 dargestellt ist, weist eine erfindungsgemäße Stromerzeugungsanlage eines Blockheizkraftwerkes einen Verbrennungsmotor 1 auf, dessen Kurbelwelle 2 über eine nicht näher dargestellte Kupplung mit einer Welle 3 eines Generators 4 verbunden ist. Der Verbrennungsmotor 1 kann dabei insbesondere ein Gas-Verbrennungsmotor sein. Die Kurbelwelle 2 des Verbrennungsmotors 1 läuft im Betrieb mit einer mit einer ersten Drehzahl n₁ und die Welle 3 des Generators 4 mit einer mit einer zweiten Drehzahl n₂. Die Drehzahlen n₁, n₂ der Wellen 2, 3 können dabei, falls ein Zwischengetriebe vorgesehen ist, unterschiedlich sein, können aber auch - ohne Zwischengetriebe - den gleichen Wert aufweisen.

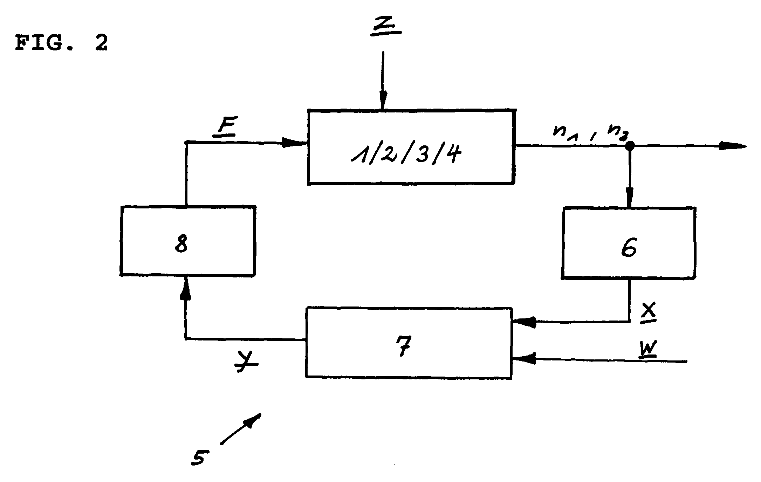

Die Anordnung weist weiterhin, wie in Fig. 2 schematisch dargestellt ist, mindestens einem Regelkreis 5 zur Regelung der Wellendrehzahl n₁, n₂ des Verbrennungsmotors 1 bzw. des Generators 4 auf. Der Verbrennungsmotor 1 mit seiner Kurbelwelle 2 und der Generator 4 mit seiner Welle 3 bilden die Regelstrecke des Regelkreises 5.

Als Störgröße z wirkt z.B. auf die Regelstrecke eine plötzliche Laständerung, wie sie durch Lastabwurf im Netzparallelbetrieb oder durch kurzfristige Laständerungen im Inselbetrieb verursacht sein kann. Durch die Einwirkung der Störgröße z kann, wie schon eingangs beschrieben, die Regelgröße (Wellendrehzahl n₁, n₂) verändert werden.

Im Regelkreis 5 ist weiterhin eine Meß- und Signalumformeinrichtung 6 für die Wellendrehzahl n₁, n₂ vorgesehen, in der entsprechend der Wellendrehzahl n₁, n₂ ein Istwert-Signal x gebildet wird. Dabei kann in der Meßeinrichtung 6 auch eine Meßwertumformung, beispielsweise die Bildung einer Ableitung des Verlaufs der Drehzahl n₁, n₂ nach der Zeit (Gradientenbildung), also die Ermittlung der Beschleunigung a₁, a₂ der Drehzahl n₁, n₂ vorgenommen werden. Die Beschleunigung a₁, a₂ kann positive und negative Werte annehmen, wobei es sich im Fall eines negativen Wertes der Beschleunigung a₁, a₂ um eine Verzögerung handelt.

Als Meß- und Signalumformeinrichtung 6 kann auch ein Sensor zur direkten Messung der Beschleunigung a₁, a₂ eingesetzt werden. Bei dem Istwert-Signal x kann es sich somit um einen aus mehreren Einzelgrößen (Drehzahl n₁, n₂, Beschleunigung a₁, a₂) bestehenden Vektor handeln, was durch die Unterstreichung symbolisch angedeutet wird.

Wie Fig. 2 außerdem zeigt, ist der Meß- und Signalumformeinrichtung 6 ein Regler 7 nachgeordnet. In dem Regler 7 wird das in der Meß- und Signalumformeinrichtung 6 erzeugte Istwert-Signal x mit einem Sollwert-Signal w verglichen. In Analogie zum Istwert-Signal x kann es sich auch bei dem Sollwert-Signal w um einen Vektor mehrerer aus der Wellendrehzahl n₁, n₂ abgeleiteter relevanter Betriebsgrößen der Anlage handeln. Entsprechend der Abweichung zwischen Istwert-Signal x und Sollwert-Signal w wird im Regler 7 ein Stellsignal y erzeugt, welches als Eingangsgröße in ein dem Regler 7 nachgeordnetes Stellglied gelangt.

Erfindungsgemäß ist als dem Regler 7 nachgeordnetes Stellglied des Regelkreises 5 mindestens eine direkt auf mindestens eine der Wellen 2, 3 wirkende Bremseinrichtung 8 vorgesehen. Dabei kann der Regelkreis auch mehrere Stellglieder umfassen, d.h. es können mehrere Bremseinrichtungen 8 vorgesehen sein, wobei im Allgemeinfall auch das Stellsignal y als Vektor aufzufassen ist.

Wie Fig. 2 zeigt, ist eine von der Bremseinrichtung 8 aufgebrachte Bremskraft F, die aus mehreren, an unterschiedlichen Stellen angreifenden Bremskraft-Komponenten bestehen kann, die auf die Regelstrecke zurückwirkende Stellgröße des Regelkreises.

Wie Fig. 1 für das erste Ausführungsbeispiel der Erfindung veranschaulicht, kann die Bremseinrichtung 8 im Bereich der Kupplung (innerhalb der Kupplungsglocke 9) zwischen Verbrennungsmotor 1 und Generator 4 angeordnet sein.

Weiterhin ist in Fig. 1 zu erkennen, daß es sich bei der Bremseinrichtung 8 des ersten Ausführungsbeispiels um eine Scheibenbremse handelt. Die Scheibenbremse weist einen Bremssattel 10 und eine Bremsscheibe 11 auf. Der Bremssattel 10 stützt sich vorzugsweise direkt am Verbrennungsmotor 1 ab. Um eine einseitige Belastung der Kurbelwelle 2 durch die auftretende Bremskraft F zu vermeiden, können mit Vorteil auch mehrere Bremssättel 10 angebracht werden.

Als Bremseinrichtungen 8 können auch andere mechanische, fluidische, elektrische o.a. Bremsen (z.B. Trommelbremsen, Strömungsbremsen, Wirbelstrombremsen) eingesetzt werden, wobei bedarfsweise auch eine Kombination mehrerer Bremseinrichtungen 8 möglich ist.

Die Regelung der Wellendrehzahl n₁, n₂ kann dabei bedarfsweise durch eine intermittierende Betätigung der Bremseinrichtung 8 erfolgen (Intervallbremsung).

Der Verbrennungsmotor 1 und der Generator 4 bilden vorteilhafterweise gemäß der ersten (und auch der weiteren hier dargestellten) Ausführung der Erfindung ein Modul mit einem gemeinsamen Grundrahmen 12.

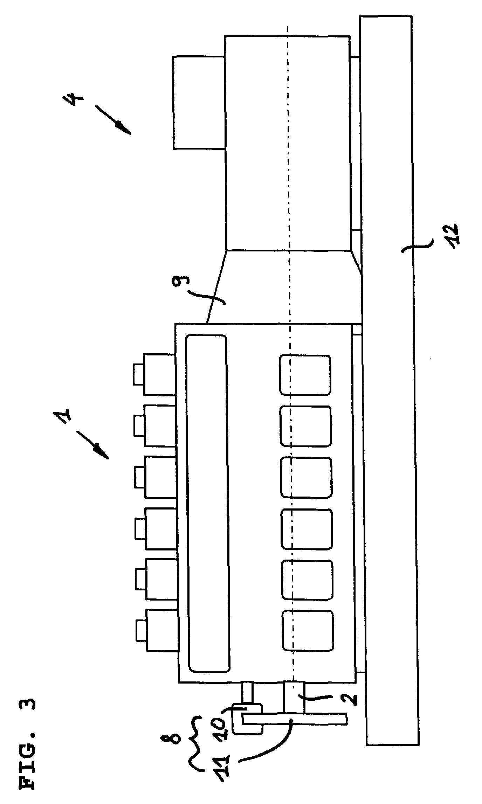

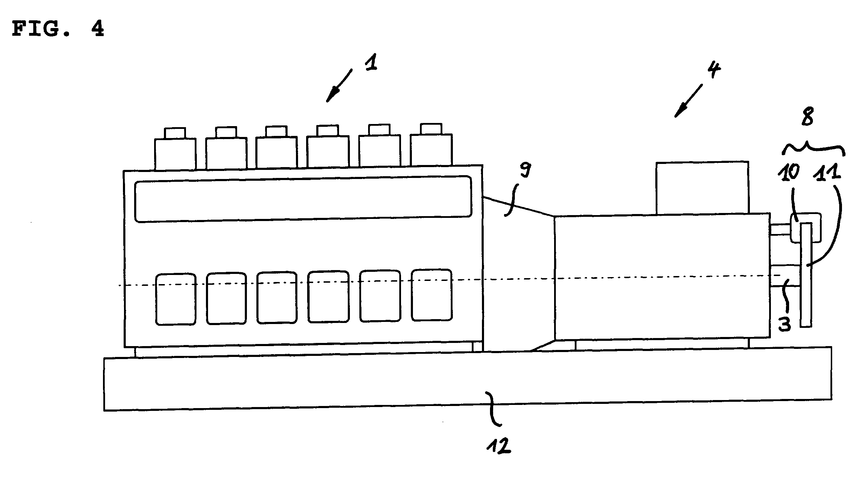

In Fig. 3 und 4 sind eine alternative Ausführungsformen zur Anordnung gemäß Fig. 1 dargestellt, wobei gleiche Teile wie in Fig. 1 mit denselben Bezugsziffern gekennzeichnet sind und daher nicht nochmals beschrieben sind.

Bei der in Fig. 3 dargestellten Ausführung ist eine erfindungsgemäß vorgesehene Bremseinrichtung 8 im Bereich des dem Generator 4 abgewandten Endes an der Kurbelwelle 2 des Verbrennungsmotors 1 angeordnet. Auch hier handelt es sich bei der Bremseinrichtung 8 um eine Scheibenbremse mit einer Bremsscheibe 11 und einem Bremssattel 10, der wie in der ersten Ausführung direkt am Verbrennungsmotor 1 befestigt ist. Die Bremsscheibe 11 ist an der Kurbelwelle 2 des Verbrennungsmotors 1 befestigt.

Eine weitere erfindungsgemäße Ausgestaltung (Fig. 4) kann darin bestehen, daß die (oder im Falle mehrerer Bremseinrichtungen 8 - eine) Bremseinrichtung 8 im Bereich des dem Verbrennungsmotor 1 abgewandten Endes an der Welle 3 des Generators 4 angeordnet ist. Die Bremseinrichtung 8 ist wiederum eine Scheibenbremse mit einer Bremsscheibe 11 und einem Bremssattel 10, der sich in diesem Fall jedoch am Generator 4 abstützt. Die Bremsscheibe 11 ist an der Welle 3 des Generators 4 befestigt. Hieran wird deutlich, daß die Regelung der Wellendrehzahl n₂ der Welle 3 des Generators 4 einer Regelung der Wellendrehzahl n₁ der Welle 2 des Verbrennungsmotors 1 äquivalent ist.

Alternativ oder zusätzlich könnten der oder die Bremssättel 10 einer oder mehrerer Scheibenbremse(n) auch an dem gemeinsamen Grundrahmen 12 des Moduls von Verbrennungsmotor 1 und Generator 4 befestigt sein.

Entsprechend dem erfindungsgemäßen Verfahren zum Betrieb einer Stromerzeugungsanlage, wie sie beispielhaft vorstehend dargestellt wurde, erfolgt - bei einem infolge von Laständerungen als Störgrößen z auftretenden Anstieg der Wellendrehzahl n₁, n₂ - eine Drehzahlminderung mit Hilfe der Bremseinrichtung 8, die als Stellglied des Regelkreises 5 der Wellendrehzahl n₁, n₂ fungiert.

Durch die im Regelkreis 5 vorgesehene Meß- und Signalumformeinrichtung 6 kann die Wellendrehzahl n₁, n₂ und/oder die Beschleunigung a₁, a₂ der Wellendrehzahl n₁, n₂ gemessen bzw. ermittelt werden. Zu diesem Zweck können mit Vorteil beispielsweise an der Kurbelwelle 2 des Verbrennungsmotors 1 lokalisierte Tachogeneratoren oder auch opto-elektronische oder magnetische Impuls-Drehzahlaufnehmer, wie z.B. eine Hallsonde oder ein Hochfrequenzmeßkopf, eingesetzt werden.

Um bei auftretenden Laständerungen eine schnelle und effektive Minderung der ansteigenden Wellendrehzahl n₁, n₂ zu erreichen, ist es vorteilhaft, wenn zwischen der Wellendrehzahl n₁, n₂ als Eingangsgröße und der Bremskraft F der Bremseinrichtung 8 als Ausgangsgröße eine Zuordnung im Sinne eines P-, I- oder PI-Übertragungsverhaltens besteht. Dementsprechend kann der Regler 7 ausgelegt bzw. die Bremseinrichtung 8 ausgewählt werden.

Bei einem P-Übertragungsverhalten ist die Ausgangsgröße Bremskraft F proportional zur Eingangsgröße Wellendrehzahl n₁, n₂, während bei einem I-Übertragungsverhalten die Bremskraft F proportional dem Integral der Wellendrehzahl n₁, n₂ über die Zeit ist. Ein PI-Übertragungsverhalten zwischen Bremskraft F und Wellendrehzahl n₁, n₂ entsteht durch Parallelschaltung von zwei linearen Übertragungsgliedern mit P- und I-Übertragungsverhalten.

Damit betriebsbedingte geringfügige Schwankungen der Drehzahl n₁, n₂ nicht zu einem ungewollten vorzeitigen Ansprechen der Bremseinrichtung 8 führen, kann es erfindungsgemäß vorgesehen sein, die Bremseinrichtung 8 erst bei Überschreitung einer maximalen Grenz-Wellendrehzahl n₁ₘₐₓ, n₂ₘₐₓ zu aktivieren.

Alternativ oder zusätzlich ist es aber auch möglich, daß die Bremseinrichtung 8 bei Überschreitung eines maximalen Grenzwertes a₁ₘₐₓ, a₂ₘₐₓ der Beschleunigung a₁, a₂ der Wellendrehzahl n₁, n₂ aktiviert wird.

In Analogie dazu gibt es auch für die Deaktivierung der Bremseinrichtung 8 verschiedene Alternativen. Es kann erfindungsgemäß vorgesehen sein, die Bremseinrichtung 8 bei Unterschreitung einer minimalen, durch den Bremsvorgang erreichten Grenz-Wellendrehzahl n₁ₘᵢₙ, n₂ₘᵢₙ sowie zusätzlich oder alternativ bei Unterschreitung eines minimalen Grenzwertes a₁ₘᵢₙ, a₂ₘᵢₙ der Beschleunigung a₁, a₂ der Wellendrehzahl n₁, n₂ zu deaktivieren. Dieser minimale Grenzwert a₁ₘᵢₙ, a₂ₘᵢₙ der Beschleunigung a₁, a₂ der Wellendrehzahl n₁, n₂ kann dabei den Wert Null oder vorzugsweise einen negativen Wert annehmen.

Der Regler 7 kann vorteilhafterweise hinsichtlich seines Sollwertes w an die jeweiligen Forderungen angepaßt werden. Wenn anstelle eines Sollwertes w jeweils ein oberer und ein unterer Grenzwert n₁ₘₐₓ, n₂ₘₐₓ, n₁ₘᵢₙ, n₂ₘᵢₙ bzw. a₁ₘₐₓ, a₂ₘₐₓ, a₁ₘᵢₙ, a₂ₘᵢₙ zu beachten sind, entsteht in dem Regelkreis 5 eine Zweipunktregelung. Wenn der häufigst auftretende stochastische Verlauf der Störgröße z bekannt, ist kann der Regler 7 hinsichtlich seines Übertragungsverhaltens bzw. seiner Zeitkonstanten auf diesen Verlauf abgestimmt werden.

Das erfindungsgemäße Verfahren und die erfindungsgemäße Anordnung sind vornehmlich als Ergänzung einer bekannten Regelung der Wellendrehzahl n₁, n₂ einsetzbar, d.h. daß mindestens zwei Regelkreise zur Regelung der Wellendrehzahl n₁, n₂ bestehen, wobei in dem zweiten Regelkreis eine zentrale Drosselklappe als Stellglied oder mehrere dezentrale, separat auf einzelne Zylinder des Verbrennungsmotors 1 wirkende Stellglieder für die Menge des dem Verbrennungsmotor 1 zur Verbrennung zugeführten Gasgemisches vorgesehen sind.

Erfindungsgemäß erfolgt dann in einem Bereich der Wellendrehzahl n₁, n₂ unterhalb der maximalen Grenz-Wellendrehzahl n₁ₘₐₓ, n₂ₘₐₓ und/oder - je nach Festlegung der entsprechenden Grenzwerte n₁ₘᵢₙ, n₂ₘᵢₙ, n₁ₘₐₓ, n₂ₘₐₓ - unterhalb der minimalen Grenz-Wellendrehzahl n₁ₘᵢₙ, n₂ₘᵢₙ eine Regelung der Wellendrehzahl mit Hilfe des zweiten Regelkreises der Wellendrehzahl n₁, n₂ durch Drosselung oder Verstärkung der Zufuhr des zur Verbrennung im Verbrennungsmotor 1 vorgesehenen Gasgemisches.

Als zusätzliche oder alternative Bedingung für den alleinige Betrieb des zweiten Regelkreises der Wellendrehzahl n₁, n₂ kann auch das Vorliegen einer Beschleunigung a₁, a₂ der Wellendrehzahl n₁, n₂ unterhalb ihres maximalen und/oder minimalen Grenzwertes a₁ₘₐₓ, a₂ₘₐₓ, a₁ₘᵢₙ, a₂ₘᵢₙ gewählt werden.

Die vorliegende Erfindung ist nicht auf die beschriebenen Ausführungsbeispiele beschränkt, sondern umfaßt alle im Sinne der Erfindung gleichwirkende Ausführungsformen. So können beispielsweise die in der Meß- und Signalumformeinrichtung 6 für die Wellendrehzahl n₁, n₂ erzeugten Signale x mit Vorteil als Reglereingangsgrößen für mehrere Regelkreise dienen, so daß nicht in jedem Regelkreis separate Sensoren für die Drehzahl n₁, n₂ und gegebenenfalls für die Beschleunigung a₁, a₂ vorgesehen werden müssen. In einem komplexen Regelsystem kann, ohne daß der Rahmen der Erfindung verlassen wird, z.B. ein Mikroprozessor als Regler 7 eingesetzt werden und eine andere Übertragungsfunktion als die beschriebenen vorliegen. Wie bereits erwähnt, kann zwischen Verbrennungsmotor 1 und Generator 4 ein Zwischengetriebe vorgesehen sein, wobei für es für die Erfindung unerheblich ist, ob die Drehzahlen n₁, n₂ von Kurbelwelle 2 und Generatorwelle 3 identisch sind oder voneinander abweichen. Ferner ist die Erfindung bislang noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Verbrennungsmotor
- 2: Kurbelwelle von 1
- 3: Welle von 4
- 4: Generator
- 5: Regelkreis
- 6: Meß- und Signalumformeinrichtung
- 7: Regler
- 8: Bremseinrichtung
- 9: Kupplungsglocke
- 10: Bremssattel
- 11: Bremsscheibe
- 12: Grundrahmen von 1/2
- a₁: Beschleunigung von 2
- a₂: Beschleunigung von 3
- a₁ₘᵢₙ: Beschleunigung a₁, unterer Grenzwert
- a₂ₘᵢₙ: Beschleunigung a₂, unterer Grenzwert
- a₁ₘₐₓ: Beschleunigung a₁, oberer Grenzwert
- a₂ₘₐₓ: Beschleunigung a₂, oberer Grenzwert
- F: Bremskraft von 8
- n₁: Drehzahl von 2
- n₂: Drehzahl von 3
- n₁ₘᵢₙ: Drehzahl von 2, unterer Grenzwert
- n₂ₘᵢₙ: Drehzahl von 3, unterer Grenzwert
- n₁ₘₐₓ: Drehzahl von 2, oberer Grenzwert
- n₂ₘₐₓ: Drehzahl von 3, oberer Grenzwert
- w: Sollwert-Signal
- x: Istwert-Signal
- y: Stellsignal
- z: Störgröße

## Patentansprüche

1. Verfahren zur Regelung einer Stromerzeugungsanlage, insbesondere eines Blockheizkraftwerkes, bestehend aus einem Verbrennungsmotor (1), insbesondere einem Gas-Verbrennungsmotor, und einem elektrischen Generator (4), wobei eine mit einer ersten Drehzahl (n₁) laufende Kurbelwelle (2) des Verbrennungsmotors (1) mit einer mit einer zweiten Drehzahl (n₂) laufenden Welle (3) des Generators (4) verbunden ist,
**dadurch gekennzeichnet,** daß bei einem infolge von Laständerungen auftretenden raschen Anstieg der Wellendrehzahl (n₁, n₂) die Wellendrehzahl (n₁, n₂) mit Hilfe mindestens einer direkt auf mindestens eine der Wellen (2, 3) wirkenden Bremseinrichtung (8) abgebremst wird.

2. Verfahren nach Anspruch 1,
**dadurch gekennzeichnet,** daß zur Regelung der Wellendrehzahl (n₁, n₂) die Beschleunigung (a₁) der Wellendrehzahl (n₁) der Welle (2) des Verbrennungsmotors (1) bestimmt wird.

3. Verfahren nach Anspruch 1,
**dadurch gekennzeichnet,** daß zur Regelung der Wellendrehzahl (n₁, n₂) die Beschleunigung (a₂) der Wellendrehzahl (n₂) Welle (3) des Generators (4) bestimmt wird.

4. Verfahren nach einem oder mehreren der Ansprüche 1 bis 3,
**dadurch gekennzeichnet,** daß die Bremseinrichtung (8) bei Überschreitung einer maximalen Grenz-Wellendrehzahl (n₁ₘₐₓ, n₂ₘₐₓ) aktiviert wird.

5. Verfahren nach einem oder mehreren der Ansprüche 1 bis 4,
**dadurch gekennzeichnet,** daß die Bremseinrichtung (8) bei Unterschreitung einer minimalen Grenz-Wellendrehzahl (n₁ₘᵢₙ, n₂ₘᵢₙ) deaktiviert wird.

6. Verfahren nach einem oder mehreren der Ansprüche 1 bis 5,
**dadurch gekennzeichnet,** daß die Bremseinrichtung (8) bei Überschreitung eines maximalen Grenzwertes (a₁ₘₐₓ, a₂ₘₐₓ) der Beschleunigung (a₁, a₂) der Wellendrehzahl (n₁, n₂) aktiviert wird.

7. Verfahren nach einem oder mehreren der Ansprüche 1 bis 6,
**dadurch gekennzeichnet,** daß die Bremseinrichtung (8) bei Unterschreitung eines minimalen Grenzwertes (a₁ₘᵢₙ, a₂ₘᵢₙ) der Beschleunigung (a₁, a₂) der Wellendrehzahl (n₁, n₂) deaktiviert wird.

8. Verfahren nach einem oder mehreren der Ansprüche 1 bis 7,
**dadurch gekennzeichnet,** daß in einem Bereich der Wellendrehzahl (n₁, n₂) unterhalb der maximalen und/oder minimalen Grenz-Wellendrehzahl (n₁ₘₐₓ, n₂ₘₐₓ, n₁ₘᵢₙ, n₂ₘᵢₙ) und/oder in einem Bereich der Beschleunigung (a₁, a₂) der Wellendrehzahl (n₁, n₂) unterhalb ihres maximalen und/oder minimalen Grenzwertes (a₁ₘₐₓ, a₂ₘₐₓ, a₁ₘᵢₙ, a₂ₘᵢₙ) eine Regelung der Wellendrehzahl (n₁, n₂) mit Hilfe eines zweiten Regelkreises der Wellendrehzahl (n₁, n₂) durch Drosselung oder Verstärkung der Zufuhr eines zur Verbrennung im Verbrennungsmotor (1) vorgesehenen Gasgemisches erfolgt.

9. Verfahren nach einem oder mehreren der Ansprüche 1 bis 8,
**dadurch gekennzeichnet,** daß die Regelung der Wellendrehzahl (n₁, n₂) durch eine intermittierende Betätigung der Bremseinrichtung (8) erfolgt.

10. Stromerzeugungsanlage, insbesondere eines Blockheizkraftwerkes, bestehend aus einem Verbrennungsmotor (1), insbesondere einem Gas-Verbrennungsmotor, und einem elektrischen Generator (4), wobei eine mit einer ersten Drehzahl (n₁) laufende Kurbelwelle (2) des Verbrennungsmotors (1) mit einer mit einer zweiten Drehzahl (n₂) laufenden Welle (3) des Generators (4) verbunden ist,
**dadurch gekennzeichnet,** daß zur Regelung der Wellendrehzahl (n₁, n₂) mindestens eine direkt auf mindestens eine der Wellen (2, 3) wirkende Bremseinrichtung (8) vorgesehen ist.

11. Anlage nach Anspruch 10,
**dadurch gekennzeichnet,** daß mindestens eine Bremseinrichtung (8) im Bereich der Kupplung zwischen Verbrennungsmotor (1) und Generator (4) angeordnet ist.

12. Anlage nach Anspruch 10 oder 11,
**dadurch gekennzeichnet,** daß mindestens eine Bremseinrichtung (8) im Bereich des dem Generator (4) abgewandten Endes an der Kurbelwelle (2) des Verbrennungsmotors (1) angeordnet ist.

13. Anlage nach einem der Ansprüche 10 bis 12,
**dadurch gekennzeichnet,** daß mindestens eine Bremseinrichtung (8) im Bereich des dem Verbrennungsmotor (1) abgewandten Endes an der Welle (3) des Generators (4) angeordnet ist.

14. Anlage nach einem der Ansprüche 10 bis 13,
**dadurch gekennzeichnet,** daß mindestens eine Bremseinrichtung (8) eine Trommelbremse ist.

15. Anlage nach einem der Ansprüche 10 bis 14,
**dadurch gekennzeichnet,** daß mindestens eine Bremseinrichtung (8) eine Strömungsbremse ist.

16. Anlage nach einem der Ansprüche 10 bis 15,
**dadurch gekennzeichnet,** daß mindestens eine Bremseinrichtung (8) eine Scheibenbremse mit mindestens einem Bremssattel (10) und einer Bremsscheibe (11) ist.

17. Anlage nach Anspruch 16,
**dadurch gekennzeichnet,** daß die Scheibenbremse mindestens zwei Bremssättel (11) aufweist.

18. Anlage nach Anspruch 16 oder 17,
**dadurch gekennzeichnet,** daß mindestens ein Bremssattel (10) der Scheibenbremse am Verbrennungsmotor (1) und die Bremsscheibe (11) an der Kurbelwelle (2) des Verbrennungsmotors (1) befestigt ist.

19. Anlage nach einem der Ansprüche 16 bis 18,
**dadurch gekennzeichnet,** daß mindestens ein Bremssattel (10) der Scheibenbremse am Generator (4) und die Bremsscheibe (11) an der Welle (3) des Generators (4) befestigt ist.

20. Anlage nach einem der Ansprüche 16 bis 19,
**dadurch gekennzeichnet,** daß der Verbrennungsmotor (1) und der Generator (4) ein Modul mit einem gemeinsamen Grundrahmen (12) bilden, an dem mindestens ein Bremssattel (10) der Scheibenbremse befestigt ist.

21. Anlage nach einem der Ansprüche 10 bis 20,
**gekennzeichnet durch** zwei Regelkreise zur Regelung der Wellendrehzahl (n₁, n₂), wobei in dem zweiten Regelkreis eine zentrale Drosselklappe für die Menge des dem Verbrennungsmotor (1) zur Verbrennung zugeführten Gasgemisches als Stellglied angeordnet ist.

22. Anlage nach einem der Ansprüche 10 bis 20,
**gekennzeichnet durch** zwei Regelkreise zur Regelung der Wellendrehzahl (n₁, n₂), wobei in dem zweiten Regelkreis mehrere dezentrale, separat auf einzelne Zylinder des Verbrennungsmotors (1) wirkende Stellglieder für die Menge des dem Verbrennungsmotor (1) zur Verbrennung zugeführten Gasgemisches angeordnet sind.

23. Anlage nach einem der Ansprüche 10 bis 22,
**dadurch gekennzeichnet,** daß die mit der ersten Drehzahl (n₁) laufende Kurbelwelle (2) des Verbrennungsmotors (1) über ein Zwischengetriebe mit der mit der zweiten Drehzahl (n₂) laufenden Welle (3) des Generators (4) verbunden ist.
